# EUROPÄISCHE PATENTSCHRIFT

(11) **EP 3 663 488 B1**
(45) Veröffentlichungstag und Bekanntmachung des Hinweises auf die Patenterteilung: **15.09.2021**
(21) Anmeldenummer: 19206097.8
(22) Anmeldetag: 30.10.2019
(51) Int. Cl.: E04H 6/30, E04H 6/36, B60S 13/00

(54) **PARKROBOTER FÜR EIN KRAFTFAHRZEUG**
PARKING ROBOT FOR A MOTOR VEHICLE
ROBOT DE STATIONNEMENT POUR UN VÉHICULE AUTOMOBILE

(30) Priorität: 06.12.2018 DE 102018221173
(43) Veröffentlichungstag der Anmeldung: 10.06.2020
(73) Patentinhaber: Volkswagen AG, 38440 Wolfsburg (DE)
(72) Erfinder: Ibenthal, Julius, 31275 Lehrte (DE); Tzivanopoulos, Theodoros, 38442 Wolfsburg (DE)

(56) Entgegenhaltungen:
- DE-A1-102011 109 597
- DE-A1-102015 203 506

## Beschreibung

Die Erfindung betrifft einen Parkroboter für ein Kraftfahrzeug.

Ein Parkroboter ist üblicherweise dazu ausgelegt, ein Kraftfahrzeug innerhalb einer vorgegebenen Infrastrukturumgebung, beispielsweise einem Parkhaus, zu einer vorgegebenen Parkposition zu transportieren. Der Parkroboter fährt dafür beispielsweise mit zumindest einem Teilbereich unter das Kraftfahrzeug, hebt dieses an und fährt daraufhin mit dem angehobenen Kraftfahrzeug zur vorgegebenen Parkposition, an der er das Kraftfahrzeug wieder absetzt. Mittels eines Parkroboters kann somit ein Kraftfahrzeug, unabhängig davon, ob es beispielsweise über ein Fahrerassistenzsystem zum zumindest teilautonomen Einparken verfügt oder nicht, vollautonom und somit ohne Zutun eines Fahrers des Kraftfahrzeugs innerhalb der Infrastrukturumgebung bewegt werden.

In der DE 10 2016 224 098 A1 wird eine omnidirektionale mobile Kraftfahrzeug-Transportplattform beschrieben, die wenigstens drei Mecanumräder aufweist. Mit dieser mobilen Kraftfahrzeug-Transportplattform kann in den Zwischenraum zwischen einem Fahrzeugboden eines Kraftfahrzeugs und einer Fahrbahn gefahren werden und daraufhin das Kraftfahrzeug mittels einer Hubvorrichtung der Kraftfahrzeug-Transportplattform von der Fahrbahn angehoben werden. Hiermit wird das Kraftfahrzeug zumindest achsweise oder vollständig von der Fahrbahn abgehoben.

In der CN 207761382 U wird ein Transportwagen für ein Kraftfahrzeug beschrieben, der an zwei gegenüberliegenden Seiten jeweilige Klemmteile aufweist und dazu ausgelegt ist, unterhalb des Kraftfahrzeugs positioniert zu werden und mit den jeweiligen Klemmteilen ein jeweiliges Rad einer Radachse des Kraftfahrzeugs anzuheben.

Die DE 10 2015 203 506 A1 zeigt eine automobile Transporteinheit zum Positionieren eines Stellfahrzeugs innerhalb eines Parkraums. Mittels der Transporteinheit kann zumindest ein Rad des Stellfahrzeugs angehoben und zu einer vorgegebenen Stellfläche im Parkraums transportiert werden.

Es ist die Aufgabe der Erfindung, eine Lösung bereitzustellen, mit der ein Parkroboter, der dazu ausgelegt ist, ein Kraftfahrzeug zu transportieren, das Kraftfahrzeug anheben kann.

Diese Aufgabe wird durch den Gegenstand des unabhängigen Patentanspruchs gelöst. Vorteilhafte Ausgestaltungen mit zweckmäßigen und nicht-trivialen Weiterbildungen der Erfindung sind in den abhängigen Ansprüchen, der folgenden Beschreibung und den Figuren angegeben.

Der Erfindung liegt die Erkenntnis zugrunde, dass herkömmliche einteilige oder mehrteilige Parkroboter, die jeweils im Bereich einer Radachse des Kraftfahrzeugs oder im Bereich einzelner Räder des Kraftfahrzeugs die jeweiligen Räder anheben, nur eine geringe Bauhöhe aufweisen dürfen. Der Grund hierfür ist, dass der Parkroboter üblicherweise eine Haltevorrichtung zum Festhalten zumindest eines Rades des Kraftfahrzeugs aufweist, die in einem unteren Teilbereich des jeweiligen Rades des Kraftfahrzeugs dieses festhalten soll. Ein Fahrwerk eines Parkroboters sollte daher eine möglichst kleine Höhe in einer Parkroboterhochrichtung aufweisen. Bei derartig niedrig ausgebildeten Parkrobotern wird allerdings häufig auf Mecanum-Räder zurückgegriffen, die omnidirektionale Fahrmanöver ermöglichen, ohne mit einer mechanischen Lenkung ausgestattet sein zu müssen. Mecanum-Räder weisen jedoch den Nachteil auf, dass diese beim Fahren viel Schlupf aufweisen und mit diesen keine Stufen gefahren werden können, da die Mecanum-Räder an diesen abrutschen würden. Es ist daher vorteilhaft, zum Fortbewegen des Parkroboters auf einfache Räder oder Rollen zurückzugreifen und über eine entsprechende Antriebseinrichtung ein omnidirektionales Hubfahrwerk für den Parkroboter zu realisieren. Der erfindungsgemäße Parkroboter für ein Kraftfahrzeug umfasst zunächst eine Haltevorrichtung zum Festhalten eines Rades des Kraftfahrzeugs. Diese Haltevorrichtung kann beispielsweise u-förmig mit jeweiligen abgerundeten oder spitzen Ecken ausgebildet sein, wobei ein Abstand zwischen zwei jeweiligen gegenüberliegenden Radhaltearmen der Haltevorrichtung derart vorgesehen sein kann, dass zwischen die zwei Radhaltearme ein typisches Rad eines Kraftfahrzeugs passt. An zwei gegenüberliegenden Seiten der Haltevorrichtung, beispielsweise an den zwei gegenüberliegenden Radhaltearmen, ist zumindest mittelbar jeweils mindestens eine Antriebseinrichtung angeordnet. Diese Antriebseinrichtung kann beispielsweise an jeweiligen nach außen gerichteten Seiten der jeweiligen Radhaltearme der Haltevorrichtung angeordnet sein. Bevorzugt weist der Parkroboter insgesamt vier Antriebseinrichtungen auf, und zwar jeweils zwei nebeneinander angeordnete Antriebseinrichtungen an jeweils einer der zwei gegenüberliegenden Seiten der Haltevorrichtung.

Jede der zumindest zwei Antriebseinrichtungen umfasst ein höhenverstellbares Fahrwerk mit mindestens einem Parkroboterrad sowie mindestens eine Antriebsmaschine zum Antreiben des mindestens einen Parkroboterrads. Das Parkroboterrad ist hierbei als antreibbares Rad oder als antreibbare Rolle ausgebildet, wobei das höhenverstellbare Fahrwerk der jeweiligen Antriebseinrichtung bevorzugt zwei Parkroboterräder umfasst, die jeweils an sich gegenüberliegenden Positionen innerhalb der Antriebseinrichtung angeordnet sind. Bevorzugt weist zudem jedes der zwei Parkroboterräder des jeweiligen Fahrwerks eine eigene Antriebsmaschine, zum Beispiel eine eigene elektrische Antriebsmaschine, auf. Die mindestens eine elektrische Antriebsmaschine der Antriebseinrichtung wird beispielsweise von einer zentral im Parkroboter angeordneten Batterie mit elektrischer Energie versorgt.

Das Fahrwerk ist nun dazu ausgelegt, die Haltevorrichtung relativ zum mindestens einem Parkroboterrad zwischen einer abgesenkten Stellung und einer angehobenen Stellung zu verstellen. Das Fahrwerk des Parkroboters, das heißt die Komponenten des Parkroboters, die der Verbindung eines Fahrgestells des Parkroboters über die jeweiligen Parkroboterräder zu einem Fahrboden dienen, sind also dazu ausgelegt, das Fahrgestell des Parkroboters, das hier von der Haltevorrichtung umfasst wird, nach oben oder nach unten zu fahren. Durch das Verstellen zwischen der abgesenkten und der angehobenen Stellung kann somit eine Bodenfreiheit des Parkroboters, das heißt ein Abstand zwischen einer Unterseite der Haltevorrichtung und dem Fahrboden verkleinert beziehungsweise vergrößert werden.

Der Parkroboter ist nun dazu ausgelegt, an das Rad des Kraftfahrzeugs autonom in eine Aufnahmeposition heranzufahren. In dieser Aufnahmeposition hält der Parkroboter mittels der Haltevorrichtung das Rad fest, das heißt der Parkroboter postiert sich derart vor dem Rad des Kraftfahrzeugs, dass einer der Radhaltearme der Haltevorrichtung in einer Fahrzeuglängsrichtung vor dem Rad des Kraftfahrzeugs positioniert ist und der andere Radhaltearm der Haltevorrichtung in Fahrzeuglängsrichtung hinter dem Rad positioniert ist. Der Parkroboter ist zudem dazu ausgelegt, durch Verstellen der Haltevorrichtung in die angehobene Stellung mittels der jeweiligen höhenverstellbaren Fahrwerke der mindestens zwei Antriebseinrichtungen das festgehaltene Rad des Kraftfahrzeugs relativ zu den jeweiligen Parkroboterrädern anzuheben. Sobald der Parkroboter also in die Aufnahmeposition an das Rad herangefahren ist, beginnt er mittels des höhenverstellbaren Fahrwerks, die Haltevorrichtung relativ zu den jeweiligen Parkroboterrädern und somit relativ zum Fahrboden anzuheben, wobei das von der Haltevorrichtung gehaltene Rad des Kraftfahrzeugs kontinuierlich in Fahrzeughochrichtung nach oben bewegt wird. Falls die Haltevorrichtung in der Aufnahmeposition das Rad noch nicht fixiert hat, beispielsweise zwischen den zwei gegenüberliegenden Radhaltearmen der Haltevorrichtung, wird erst während des Anhebens der Haltevorrichtung beispielsweise bei einer angehobenen Zwischenstellung ein Kontakt zwischen der Haltevorrichtung und dem Rad erreicht und erst danach, während des Anhebens zwischen der Zwischenstellung und der angehobenen Stellung, das Rad vom Fahrboden tatsächlich angehoben wird.

Der Parkroboter weist bevorzugt insgesamt vier Antriebseinrichtungen auf, zwei an jeder der beiden gegenüberliegenden Seiten der Haltevorrichtungen, die jeweils zwei Parkroboterräder mit beispielsweise zwei eigenen Antriebsmaschinen umfassen. Der Parkroboter insgesamt weist somit bevorzugt acht antreibbare Parkroboterräder auf. Mittels des höhenverstellbaren Fahrwerks ist es nun möglich, dass der Parkroboter ein Rad eines Kraftfahrzeugs vom Fahrboden anheben kann. Mittels des höhenverstellbaren Fahrwerks wird somit ein Hubfahrwerk für den Parkroboter zum Transportieren von beispielsweise Kraftfahrzeugen realisiert. Hierbei kann auf relativ einfache antreibbare Räder oder Rollen zurückgegriffen werden, sodass keine aufwendigen Mecanum-Räder im Parkroboter verbaut werden müssen, um diesen platzsparend zu gestalten.

Um ein Kraftfahrzeug mit beispielsweise vier Rädern anheben zu können, um es beispielsweise durch ein Parkhaus transportieren und an einer Zielposition wieder absetzen zu können, werden beispielsweise vier Parkroboter benötigt, die jeweils eines der Räder des Kraftfahrzeugs mittels des jeweiligen höhenverstellbaren Fahrwerks der jeweiligen Antriebseinrichtungen nach oben und nach unten bewegen können. Dadurch, dass die einzelnen Parkroboter an einzelnen Rädern des Kraftfahrzeugs angeordnet sind, weist das Gesamtsystem aus Parkrobotern keine unterhalb des Kraftfahrzeugs angeordnete große Plattenkonstruktion auf, sodass mit derartigen Parkrobotern auch Rampen und Steigen, beispielsweise bei einer Fahrt von einer Etage eines Parkhauses zu einer anderen Etage des Parkhauses, überwunden werden können, ohne dass es zu einem Aufsetzen von Teilen von einem der Parkroboter auf dem Untergrund kommt.

Erfindungsgemäß ist es vorgesehen, dass die jeweilige Antriebseinrichtung jeweils eine zentrale Gewindestange aufweist. Diese zentrale Gewindestange ist an einem Ende zumindest mittelbar mit der Haltevorrichtung starr gekoppelt. Weist der Parkroboter beispielsweise insgesamt vier Antriebseinrichtungen auf, sind an einer Unterseite der Haltevorrichtung, beispielsweise an jeweiligen Halteelementen der Haltevorrichtung, insgesamt vier zentrale Gewindestangen, entweder direkt oder über ein Zwischenelement, fest angeordnet. Das Fahrwerk der jeweiligen Antriebseinrichtung weist nun jeweils eine um die jeweilige zentrale Gewindestange drehbar gelagerte Gewindemutter auf. Diese drehbar gelagerte jeweilige Gewindemutter ist zumindest mittelbar mit dem wenigstens einen Parkroboterrad des jeweiligen Fahrwerks gekoppelt. Die Gewindestange und die Gewindemutter weisen jeweils profilierte Einkerbungen auf, die fortlaufend wendelartig, das heißt als Schraubenlinien, in einer jeweiligen zylinderförmigen Wand derart verlaufen, dass die Gewindestange und die Gewindemutter ineinander passen. Bei einer Relativbewegung der Gewindemutter relativ zur Gewindestange kommt es somit zu einer Relativbewegung des jeweiligen Fahrwerks zur Haltevorrichtung.

Die jeweilige Antriebseinrichtung des Parkroboters ist dazu ausgelegt, durch jeweiliges Drehen der Gewindemutter um die jeweilige zentrale Gewindestange die Haltevorrichtung mit den jeweiligen zentralen Gewindestangen, die an der Haltevorrichtung angeordnet sind, relativ zu der jeweiligen Gewindemutter zwischen der abgesenkten und der angehobenen Stellung zu verstellen. Da die Gewindemutter vom jeweiligen Fahrwerk umfasst wird und nicht mit der Haltevorrichtung verbunden ist, ist somit das Anheben und Herunterfahren der Haltevorrichtung relativ zu den Parkroboterrädern und somit dem Fahrboden, auf dem der Parkroboter steht, möglich. Mittels Drehens der jeweiligen Gewindemutter um die jeweilige zentrale Gewindestange ist eine lineare Bewegung des Parkroboters in Parkroboterhochrichtung möglich, um letztendlich das Rad des Kraftfahrzeugs vom Fahrboden anheben und gleichzeitig die Bodenfreiheit des Parkroboters erhöhen zu können. Durch die Erhöhung der Parkroboterbodenfreiheit ist es zudem möglich, dass Fahrten auf Fahrböden mit Bodenunebenheiten, wie beispielsweise Schlaglöchern, ermöglicht werden.

Zu der Erfindung gehören auch Ausgestaltungsformen, durch die sich zusätzliche Vorteile ergeben.

In einer besonders vorteilhaften Ausgestaltungsform ist es vorgesehen, dass die jeweilige Antriebseinrichtung dazu ausgelegt ist, mittels Antreibens des mindestens einen Parkroboterrads auf einer kreisförmigen Bahn um die zentrale Gewindestange herum die Gewindemutter um die zentrale Gewindestange zu drehen. Eine Funktionsweise des höhenverstellbaren Fahrwerks basiert also darauf, dass das mindestens eine Parkroboterrad, das beispielsweise über eine Lagerachse mit der zentralen Gewindestange gekoppelt ist, derart angetrieben angesteuert wird, dass es eine Kreisbewegung fährt, das heißt auf der kreisförmigen Bahn mit einem vorgegebenen Radius, der abhängig von der Länge der jeweiligen Lagerachse ist, um die Gewindestange herumfährt. Eine Rotationsachse dieser Drehbewegung, das heißt dieser kreisförmigen Bahn, verläuft hierbei parallel zur Parkroboterhochrichtung durch einen Mittelpunkt der zentralen Gewindestange. Da die zentrale Gewindestange fest an der Haltevorrichtung angeordnet ist, kann durch dieses Drehen der Gewindemutter um die zentrale Gewindestange, das durch die kreisförmige Bewegung des mindestens einen Parkroboterrads erfolgt, ermöglicht werden, dass die Haltevorrichtung relativ zu den jeweiligen Parkroboterrädern höhenverstellt wird. Es ist also mit der beschriebenen Hubvorrichtung des Parkroboters möglich, dass ein einzelnes Rad des Kraftfahrzeugs angehoben werden kann.

Bei einer Weiterbildung des Parkroboters ist es vorgesehen, dass die jeweilige Antriebseinrichtung einen Schleifring umfasst und die mindestens eine Antriebsmaschine dazu ausgelegt ist, während des Antreibens des mindestens einen Parkroboterrads auf der kreisförmigen Bahn ebenfalls um die zentrale Gewindestange herumbewegt und mittels des Schleifrings mit elektrischer Energie versorgt zu werden. Die Antriebseinrichtung eines Parkroboterrads ist beispielsweise parallel zur Lagerachse des Parkroboterrads neben der Gewindemutter angeordnet und somit relativ nah zum Fahrwerk. Aufgrund dieser Anordnung dreht sich die Antriebsmaschine ebenfalls um die zentrale Gewindestange herum, wenn das mindestens eine Parkroboterrad um die Gewindestange herumbewegt wird. Zumindest beim Verstellen zwischen der abgesenkten und der angehobenen Stellung werden also sowohl das Parkroboterrad als auch die Antriebsmaschine um dieselbe Rotationsachse rotieren, die ihren Mittelpunkt in einem Mittelpunkt der kreisförmigen zentralen Gewindestange hat. Ein Radius jeweiliger kreisförmiger Bahnen kann hierbei gleich groß sein oder der Radius der kreisförmigen Bahn der Antriebsmaschine kann beispielsweise größer gewählt sein als der Radius der kreisförmigen Bahn des mindestens einen Parkroboterrads. Hierdurch wird es möglich, dass der Schleifring zur elektrischen Leistungsübertragung, beispielsweise von einer Batterie des Parkroboters, und/oder Signalübertragung, beispielsweise von einer Steuereinrichtung des Parkroboters, derart angeordnet ist, dass zum Beispiel mittels eines Gleitkontakts eine elektrische Verbindung, zum Beispiel zur Batterie und/oder der Steuereinrichtung, hergestellt ist. Hierdurch wird eine jeweilige voll funktionsfähige Antriebseinrichtung des Parkroboters zum Antreiben des jeweiligen mindestens einen Parkroboterrads realisiert.

Eine weitere Ausgestaltungsform sieht vor, dass die jeweilige Antriebseinrichtung zwei Parkroboterräder aufweist, die beispielsweise an gegenüberliegenden Positionen mittels jeweiliger Lagerachsen mit der Gewindemutter verbunden sind, wobei jeweilige Verlängerungen der jeweiligen Lagerachsen in Überdeckung liegen. Die jeweilige Antriebseinrichtung ist nun dazu ausgelegt, die beiden Parkroboterräder für das Verstellen der Haltevorrichtung zwischen der abgesenkten und der angehobenen Stellung jeweils in entgegengesetzte Drehrichtung der Parkroboterräder anzutreiben. Durch ein derartiges Antreiben der Parkroboterräder ist es nämlich möglich, dass diese auf der kreisförmigen Bahn um die zentrale Gewindestange herumbewegt werden, dadurch die Gewindemutter relativ zur zentralen Gewindestange bewegen und dadurch das Fahrwerk höhenzuverstellen. Zudem ist die jeweilige Antriebseinrichtung dazu ausgelegt, mittels der Parkroboterräder eine translatorische Fortbewegung des Parkroboters zu ermöglichen, das heißt eine Bewegung des Parkroboters auf dem Fahrboden nach vorne, hinten, rechts und links und somit in alle Richtungen in der Ebene, die von der Parkroboterquerrichtung und der Parkroboterlängsrichtung aufgespannt wird, durchzuführen. Hierfür ist die Antriebseinrichtung dazu ausgelegt, die zwei Parkroboterräder in der gleichen Drehrichtung anzutreiben, das heißt beide Parkroboterräder werden beispielsweise zu einem bestimmten Zeitpunkt entweder beide im Uhrzeigersinn oder entgegen des Uhrzeigersinns gedreht. Mithilfe von Differenzen der jeweiligen Drehzahlen der jeweiligen Antriebsmaschine für die jeweiligen Parkroboterräder ist es außerdem möglich, dass sich eine Orientierung des Parkroboters für die translatorische Bewegung einstellen lässt.

Es ist also mit dem Parkroboter zum einen möglich, dass es bei einer Drehung der jeweiligen zwei Parkroboterräder um die jeweilige zentrale Gewindestange zu einer Auf- oder Abwärtsbewegung der Gewindemutter relativ zur Gewindestange kommt. Hierbei besitzt das Gewinde eine geringe Steigung, sodass kleine Lenkwinkel, das heißt kleine Bewegungen entlang der kreisförmigen Bahn, nur eine geringe Hubwirkung haben und daher eine hohe Übersetzung beim Anheben vorliegt. Liegt jedoch eine Relativbewegung der beiden Parkroboterräder zueinander vor, drehen sich diese relativ zum Boden. Auf diese Weise lassen sich also Fahrmanöver auf dem Fahrboden ausführen. Der Parkroboter benötigt somit kein getrenntes Fahrwerk für vertikale und translatorische, das heißt horizontale, Bewegungen. Dadurch wird eine kompakte Bauweise des Parkroboters möglich, da dieser lediglich das beschriebene Fahrwerk pro Antriebseinrichtungen aufweisen muss, um sowohl in Parkroboterhochrichtung als auch in Parkroboterquerrichtung und Parkroboterlängsrichtung jeweils relativ zum Fahrboden beweglich sein zu können.

In einer weiteren vorteilhaften Ausgestaltungsform ist es vorgesehen, dass das jeweilige mindestens eine Parkroboterrad zumindest mittelbar über eine jeweilige Lagerachse mit der jeweiligen Gewindemutter elastisch gekoppelt ist, wobei die jeweilige Lagerachse insbesondere mit einer jeweiligen Dämpfungseinheit der Antriebseinrichtung gekoppelt ist. Hierbei kann es beispielsweise vorgesehen sein, dass an der jeweiligen Lagerachse ein Rahmengestell angeordnet ist, das über jeweilige Federn, wie beispielsweise Tellerfedern, mit einem Dämpfungsrahmen verbunden ist, der wiederum an der Unterseite der Haltevorrichtung zumindest mittelbar angeordnet ist. Erfährt der Parkroboter nun beispielsweise Stöße in vertikaler Richtung, beispielsweise aufgrund von Bodenunebenheiten des Fahrbodens, kann mittels der beschriebenen Dämpfungseinheit der jeweilige Stoß abgefangen und die damit verbundene Vibration können zumindest reduziert werden.

Zusätzlich oder alternativ dazu ist es möglich, dass zwischen der jeweiligen Antriebseinrichtung und der Gewindemutter eine Verbindungsachse angeordnet und mit dem Dämpfungsrahmen gekoppelt ist, sodass auch horizontale Stöße gedämpft und eine Stärke der aus den Stößen resultierenden Vibrationen reduziert werden kann. Dies ist möglich, da die Lagerachse beziehungsweise die Verbindungsachse zwischen der Antriebsmaschine und der Gewindemutter jeweils elastisch und somit in vorgegebenen Bewegungsgrenzen beweglich gelagert sind. Hierdurch werden die Fahreigenschaften des Parkroboters verbessert und eine Höhendifferenz auf dem Fahrboden, die sich beispielsweise durch Höhendifferenzen zwischen jeweiligen Aufstandsflächen der einzelnen Parkroboterräder ergibt, ausgeglichen werden. Eine Stoßbelastung von einzelnen Bauteilen des Parkroboters wird somit reduziert.

Eine Weiterbildung der Erfindung sieht vor, dass die jeweilige Gewindestange an ihrem jeweiligen anderen Ende mit einem jeweiligen Anschlagelement gekoppelt ist. Die Gewindestange ist somit an einem Ende mit der Haltevorrichtung zumindest mittelbar starr gekoppelt und an dem anderen Ende mit dem Anschlagelement gekoppelt. Dieses Anschlagelement ist dazu ausgebildet, das Drehen der jeweiligen Gewindemutter um die jeweilige zentrale Gewindestange an diesem Ende der jeweiligen Gewindestange bei Erreichen desselben, also bei Erreichen des Anschlagelements, zu blockieren. Die Gewindestange beziehungsweise die mehreren im Parkroboter angeordneten Gewindestangen weisen also jeweils einen unteren Anschlagspunkt auf, sodass es nicht möglich ist, die Haltevorrichtung so weit nach oben zu verstellen, dass ein Kontakt zwischen der Gewindestange und der Gewindemutter nicht mehr gegeben ist, da sich die Gewindemutter vollständig von der zentralen Gewindestange abgedreht hat. Bei umgekehrter Drehbewegung kann die Gewindemutter an die Unterseite der Haltevorrichtung anstoßen und durch diese blockiert werden. Das höhenverstellbare Fahrwerk weist also in beiden Verstellrichtungen, das heißt in Richtung der angehobenen Stellung sowie in Richtung der abgesenkten Stellung, jeweils einen maximalen Verstellungspunkt auf, an dem eine weitere Drehbewegung in die entsprechende Drehrichtung nicht mehr möglich ist. Ein Lösen der Gewindemutter von der zentralen Gewindestange ist also stets unterbunden.

In einer weiteren Ausgestaltungsform ist es vorgesehen, dass das jeweilige mindestens eine Parkroboterrad eine jeweilige Antriebswelle aufweist, die über einen jeweiligen Riementrieb mit einer jeweiligen Abtriebswelle der jeweiligen Antriebsmaschine gekoppelt ist. Die jeweiligen Antriebseinrichtungen weisen somit jeweilige Riemengetriebe auf, die jeweils als prägende Lastübertragungsmittel einen jeweiligen Riemen aufweisen. Als Getriebe findet also ein häufig im Maschinenbau verwendetes Zugmittelgetriebe Anwendung. Bei dem Riementrieb kann es sich beispielsweise um ein auf ineinander greifende Keilrippen basierenden Riementrieb handeln.

Alternativ dazu kann der Antrieb der jeweiligen Parkroboterräder ein Mehrstufengetriebe umfassen. Der Grund hierfür ist, dass beim Befahren von Rampen ein hohes Antriebsmoment und eine geringe Drehzahl, jedoch bei der Fahrt auf ebener Strecke ein geringeres Antriebsmoment und eine höhere Drehzahl benötigt werden. In beiden Fällen sollte die jeweilige Antriebsmaschine jedoch in einem optimalen Arbeitspunkt, das heißt im sogenannten Betriebspunkt, arbeiten. Dies kann beispielsweise mit einem zweistufigen Getriebe erreicht werden, das jeweilige feste Übersetzungen zwischen Antriebsmaschine und Antriebsrad für Fahrten an Steigen sowie für Fahrten auf ebener Fläche aufweist.

Alternativ oder zusätzlich dazu kann auch ein stufenloses Riemengetriebe zur Leistungsübertragung genutzt werden. Denn beim Anfahren an sowie beim Befahren von Rampen stellt sich in der Regel eine hohe Übersetzung zwischen Antriebsmaschine und Antriebsrad ein. Bei geringem Lastenmoment auf ebener Strecke sinkt diese Übersetzung jedoch wieder. Auf diese Weise kann die Handhabung von schweren Lasten, zum Beispiel von schweren Kraftfahrzeugen, verbessert werden. Das stufenlose Riemengetriebe kann sich also dynamisch an die Belastung des Parkroboters anpassen und folglich beispielsweise beim Anfahren eine andere Übersetzung aufweisen als bei hohen Geschwindigkeiten. Ein derartiges stufenlos verstellbares Getriebe wird häufig auch als Variomatik bezeichnet.

Die Verwendung eines Mehrstufengetriebes oder eines stufenlosen Riemengetriebes ist jedoch aufwändiger und kostenintensiver als die Verwendung des beschriebenen Riemengetriebes. Dieses wird daher als platzsparendes und kostengünstiges Getriebe zum Übertragen der Motorleistung der jeweiligen Antriebsmaschine zum Parkroboterrad im Parkroboter vorgesehen. Mittels dieses Riemengetriebes sind zudem die oben beschriebenen zwei Bewegungsrichtungen, und zwar die translatorische Fahrbewegung sowie die lineare Hoch- und Runterbewegung der Haltevorrichtung relativ zu den Parkroboterrädern möglich.

In einer Weiterbildung der Erfindung ist es vorgesehen, dass der Parkroboter dazu ausgelegt ist, unter das Kraftfahrzeug zu fahren und sich dort autonom an dem Rad des Kraftfahrzeugs in der Aufnahmeposition zu positionieren. Eine Oberfläche der Haltevorrichtung des Parkroboters ist daher bevorzugt flach ausgestaltet, das heißt weist keine Erhebungen oder Vertiefungen auf. Hierdurch ist es möglich, dass der Parkroboter in einen Zwischenraum zwischen einem Kraftfahrzeugboden und dem Fahrboden fahren kann. Zum Anheben des Kraftfahrzeugs fahren bevorzugt zunächst vier Parkroboter unter das Kraftfahrzeug, halten dort jeweils an einem der vier Räder des Kraftfahrzeugs an und positionieren sich dann derart, dass jeweilige Radhaltearme der jeweiligen Haltevorrichtungen der vier Parkroboter jeweils zumindest von zwei Seiten die jeweiligen Mantelflächen der jeweiligen Räder umgreifen. Es ist somit nicht nötig, dass sich der Parkroboter von außen dem Rad des Kraftfahrzeugs nähert. Hierdurch können Kraftfahrzeuge mithilfe derartiger Parkroboter so eng wie es seitlich abstehende Seitenspiegel der jeweiligen Kraftfahrzeuge zulassen nebeneinander an jeweiligen Zielpositionen abgestellt werden, da kein Platz für neben dem Kraftfahrzeug fahrende Parkroboter benötigt wird. Der beschriebene Parkroboter ist somit platzoptimiert hinsichtlich eines um das Kraftfahrzeug herum benötigten Gebiets zum sich Positionieren des Parkroboters, Anheben des Rades, Transport des Kraftfahrzeugs sowie Absenken des Rades.

In einer weiteren besonders vorteilhaften Ausgestaltungsform ist es vorgesehen, dass die Haltevorrichtung an den zwei gegenüberliegenden Seiten jeweils einen Radhaltearm zum Festhalten des Rades des Kraftfahrzeugs sowie ein Verbindungselement aufweist. Die jeweiligen Radhaltearme sind zusammen mit dem Verbindungselement derart angeordnet, dass das Verbindungselement die zwei Radhaltearme in einer Parallelstellung hält. Die Haltevorrichtung hat somit von oben betrachtet eine u-förmige Form, wobei die jeweiligen Radhaltearme zueinander parallel stehen. Die jeweiligen zumindest zwei Antriebseinrichtungen sind hierbei bevorzugt an Außenseite der jeweiligen Radhaltearme angeordnet, und zwar an jeweiligen nach außen gerichteten Außenseiten. Die jeweiligen Antriebseinrichtungen sind somit bevorzugt nicht in Richtung eines Innenraums der U-förmigen Haltevorrichtung an den jeweiligen Radhaltearmen angeordnet.

Die jeweiligen Radhaltearme weisen nun jeweilige Abgleitrollen auf, deren jeweilige Drehachse parallel zu einer Längsrichtung des jeweiligen Radhaltearms angeordnet ist. Die Abgleitrollen sind als passive Rollen ausgebildet. Sie sind also stets beweglich relativ beispielsweise zum Radhaltearm sowie zum Rad des Kraftfahrzeugs. Hierdurch ist es möglich, dass sich der Parkroboter relativ zu dem vom jeweiligen Radhaltearm festgehaltenen Rad des Kraftfahrzeugs bewegen kann. Hierdurch wird es möglich, dass mit dem Parkroboter beispielsweise Rampen, Steigungen oder andere Unebenheiten überwunden werden können, da eine Relativbewegung des Rades zum Parkroboter möglich ist.

Es ist zudem möglich, dass im Bereich der Radhaltearme beispielsweise jeweilige Sensoreinrichtungen angeordnet sind, die einen Abstand zwischen dem Radhaltearm und dem Rad des Kraftfahrzeugs in der Aufnahmeposition erfassen, woraufhin beispielsweise mittels seitlich angeordneter Spindelmotoren die Haltearme zunächst an das Rad des Kraftfahrzeugs herangefahren werden können, bis sie das Rad zwischen den beiden jeweiligen Radhaltearmen festhalten. Es ist jedoch auch möglich, dass die Haltevorrichtung ohne derartige Spindelmotoren und Sensoren ausgebildet ist und gegebenenfalls erst beim Verstellen der Haltevorrichtung relativ zu den jeweiligen Parkroboterrädern die jeweiligen Radhaltearmem in Kontakt mit dem Rad kommen und somit das tatsächliche Anheben des Rades erst ab einer vorgegebenen Höhenverstellung, der Zwischenstellung, des höhenverstellbaren Fahrwerks erfolgt. Insbesondere bei Kraftfahrzeugen mit kleinen Kraftfahrzeugbodenfreiheiten ist es relevant, dass die Haltevorrichtung mit den jeweiligen Radhaltearmen an eine Kraftfahrzeugbodenfreiheit sowie an einen Durchmesser der Räder des Kraftfahrzeugs dynamisch anpassbar ist. Die Haltevorrichtung sollte jedoch stets in einer Parkroboterhochrichtung so klein wie möglich ausgebildet sein, um auch unter ein Kraftfahrzeug mit kleiner Kraftfahrzeugbodenfreiheit fahren zu können.

Der Parkroboter kann beispielsweise eine Sensoreinrichtung umfassen, beispielsweise eine Kamera, ein Radargerät, ein Lidar-Gerät, einen Ultraschallsensor oder einen Laserscanner, und mit diesen dazu ausgelegt sein, eine Umgebung des Parkroboters zu erfassen sowie Hindernisse in der erfassten Umgebung zu erkennen und zu lokalisieren. Mithilfe einer derartigen Sensoreinrichtung, die ihre Daten beispielsweise der Steuereinrichtung des Parkroboters bereitstellt, ist es möglich, dass die Steuereinrichtung des Parkroboters beispielsweise eine Fahrtrajektorie für den Parkroboter bestimmt, sodass dieser autonom durch eine Infrastrukturumgebung, wie beispielsweise ein Parkhaus, fahren kann. Hierbei ist es zudem möglich, dass mehrere Parkroboter untereinander jeweilige Kommunikationsverbindungen aufrecht erhalten, über die beispielsweise die Fahrtrajektorie und/oder die Fahrtrajektorie betreffende Daten ausgetauscht werden. Zudem ist der Parkroboter dazu ausgelegt, Ansteuerbefehle und/oder die Fahrtrajektorie von beispielsweise einem Leitroboter, einem Infrastrukturverwaltungsserver, wie dem Parkhausverwaltungsserver, oder anderen Parkrobotern zu empfangen.

Ein Verfahren zum Betreiben eines Parkroboters wie er oben beschrieben wurde ist vorgesehen. Die im Zusammenhang mit dem erfindungsgemäßen Parkroboter vorgestellten bevorzugten Ausgestaltungen und deren Vorteile gelten entsprechend, soweit anwendbar, für das Verfahren zum Betreiben des Parkroboters. Das Verfahren umfasst beispielsweise folgende Schritte: Ein autonomes Heranfahren des Parkroboters neben ein Rad des Kraftfahrzeugs in eine Aufnahmeposition, bei der die Haltevorrichtung das Rad festhält, sowie Anheben des festgehaltenen Rads des Kraftfahrzeugs relativ zu jeweiligen Parkroboterrädern durch Verstellen einer Haltevorrichtung des Parkroboters in eine angehobene Stellung mittels wenigstens zweier höhenverstellbarer Fahrwerke.

Beschrieben wird auch die Steuereinrichtung für den Parkroboter. Die Steuereinrichtung weist eine Prozessoreinrichtung auf, die dazu eingerichtet ist, eine Ausführungsform des Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung die Ausführungsform des Verfahrens durchzuführen. Der Programmcode kann in einem Datenspeicher der Prozessoreinrichtung gespeichert sein.

Im Folgenden ist ein Ausführungsbeispiel der Erfindung beschrieben. Hierzu zeigt:
- Fig. 1: eine Draufsicht auf ein Kraftfahrzeug, das von vier Parkrobotern angehoben ist,
- Fig. 2: eine geschnittene Darstellung einer Antriebseinrichtung eines Parkroboters,
- Fig. 3: eine Perspektivansicht einer Antriebseinrichtung eines Parkroboters, und
- Fig. 4: eine geschnittene Darstellung eines Parkroboters, der an einem Rad eines Kraftfahrzeugs angeordnet ist.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

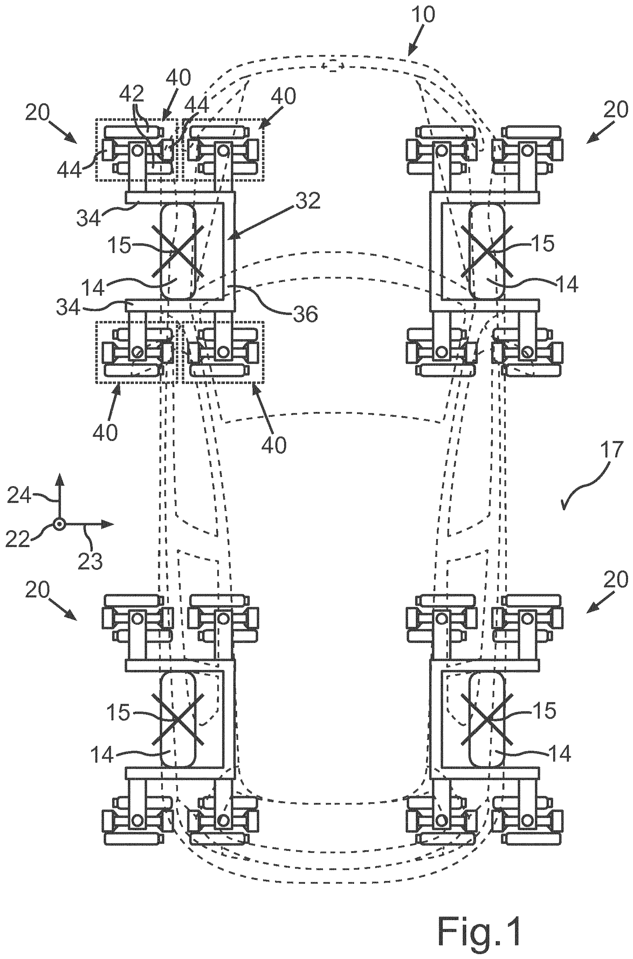

In Fig. 1 ist in einer Draufsicht ein Kraftfahrzeug 10 skizziert, das vier Räder 14 aufweist, die an jeweiligen Radaufstandsflächen 15, die hier mit einem jeweiligen Kreuz skizziert sind, auf einem Fahrboden 17 stehen. An jedem der vier Räder 14 des Kraftfahrzeugs 10 ist jeweils ein Parkroboter 20 positioniert. Die einzelnen Komponenten des Parkroboters 20 sind hierbei nur für den Parkroboter 20 oben links skizziert, jedoch für alle dargestellten Parkroboter 20 gleich.

Der Parkroboter 20 weist eine Haltevorrichtung 32 auf, die an zwei gegenüberliegenden Seiten jeweils einen Radhaltearm 34 zum Festhalten des Rades 14 des Kraftfahrzeugs 10 sowie ein Verbindungselement 36 aufweist. Das Verbindungselement 36 hält die zwei Radhaltearme 34 in einer Parallelstellung.

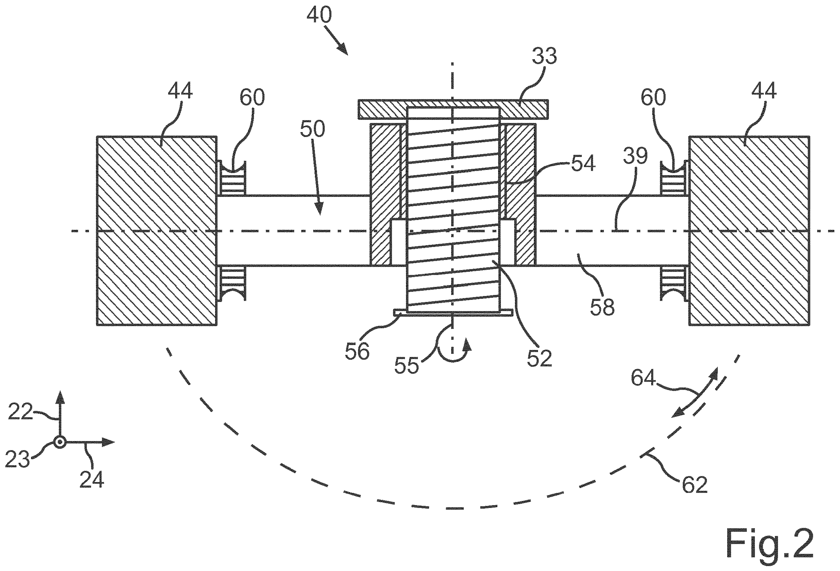

An den zwei Radhaltearmen 34 sind jeweils zwei Antriebseinrichtungen 40 angeordnet. Die insgesamt vier Antriebseinrichtungen 40 des Parkroboters 20 weisen jeweils ein höhenverstellbares Fahrwerk 50 (siehe Bezugszeichen 50 in Fig. 2) auf. Das höhenverstellbare Fahrwerk 50 umfasst zwei Parkroboterräder 44, sodass der Parkroboter 20 insgesamt acht Parkroboterräder 44 aufweist. Die Parkroboterräder 44 sind jeweils von einer elektrischen Antriebsmaschine 42 antreibbar. Die jeweiligen Antriebseinrichtungen 40 sind hierbei über jeweilige Halteelemente 33 mit der Haltevorrichtung 32 gekoppelt. In Fig. 1 ist zudem mithilfe eines Koordinatensystems eine Parkroboterhochrichtung 22, eine Parkroboterquerrichtung 23 sowie eine Parkroboterlängsrichtung 24 eingezeichnet.

Die Parkroboter 20 sind jeweils relativ flach ausgebildet, das heißt die Oberfläche des jeweiligen Parkroboters 20 ist flach ausgestaltet, sodass dieser jeweils in einen Zwischenraum zwischen einem Kraftfahrzeugboden und dem Fahrboden 17 fahren kann. Die Parkroboter 20 sind jeweils dazu ausgelegt, unter das Kraftfahrzeug 10 zu fahren und sich dort autonom an jeweils einem Rad 14 des Kraftfahrzeugs 10 in einer Aufnahmeposition, wie sie in Fig. 1 skizziert ist, zu positionieren. In dieser Aufnahmeposition wird jeweils ein Rad 14 des Kraftfahrzeugs 10 von der Haltevorrichtung 32 eines jeweiligen Parkroboters 20 festgehalten.

In Fig. 2 ist eine geschnittene Darstellung einer Antriebseinrichtung 40 des Parkroboters 20 skizziert. Das Fahrwerk 50 der Antriebseinrichtung 40 ist nämlich dazu ausgelegt, die Haltevorrichtung 32, die über das Halteelement 33 zumindest mittelbar mit der Antriebseinrichtung 40 gekoppelt ist, relativ zu den jeweiligen Parkroboterrädern 44 zwischen einer abgesenkten Stellung und einer angehobenen Stellung in Parkroboterhochrichtung 22 zu verstellen. Hierfür weist die Antriebseinrichtung 40 eine zentrale Gewindestange 52 auf, die an einem Ende zumindest mittelbar mit der Haltevorrichtung 32, und zwar über das Halteelement 33, starr gekoppelt ist. Die Gewindestange 52 weist zudem an ihrem anderen Ende ein Anschlagelement 56 auf.

Das Fahrwerk 50 der Antriebseinrichtung 40 weist eine um die zentrale Gewindestange 52 drehbar gelagerte Gewindemutter 54 auf, die zumindest mittels einer Lagerachse 58 mit den beiden Parkroboterrädern 44 gekoppelt ist. Die Antriebseinrichtung 40 ist nun dazu ausgelegt, durch jeweiliges Drehen der Gewindemutter 54 um die zentrale Gewindestange 52 die Haltevorrichtung 32, an der die zentrale Gewindestange 52 angeordnet ist, relativ zu der Gewindemutter 54 zwischen der abgesenkten und der angehobenen Stellung zu verstellen. Dies erfolgt, indem die beiden Parkroboterräder 44 auf einer kreisförmigen Bahn 62 um die zentrale Gewindestange 52 herum angetrieben werden, wodurch die Gewindemutter 54 um die zentrale Gewindestange 52 gedreht wird. Die beiden Parkroboterräder 44 drehen sich also in der eingezeichneten Drehrichtung 64 um eine Rotationsachse 55, die durch einen Mittelpunkt der Gewindestange 52 verläuft. Da am jeweiligen Ende der Gewindestange 52 entweder das Halteelement 33 oder das Anschlagelement 56 starr gekoppelt sind, wird das Drehen der Gewindemutter 54 um die zentrale Gewindestange 52 an jedem der beiden Enden der Gewindestange 52 blockiert. Die Parkroboterräder 44 drehen sich hierbei um die Drehachse 39, um sich auf der kreisförmigen Bahn 62 oder einer anderen Bewegungsrichtung zu bewegen. Zur Energieübertragung von der Antriebsmaschine 42 zum Parkroboterrad 44 sind jeweilige Keilräder 60 vorgesehen.

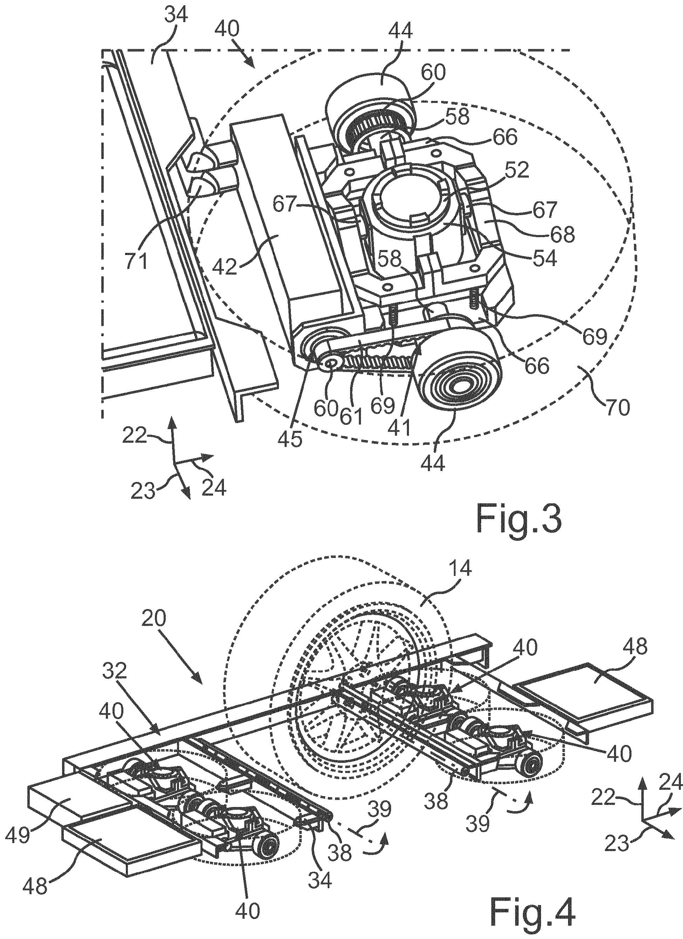

In Fig. 3 ist im Detail eine Perspektivansicht der Antriebseinrichtung 40 skizziert. Hierbei wird insbesondere der Antriebsmechanismus der Parkroboterräder 44 verdeutlicht. Denn jedes der Parkroboterräder 44 weist eine Antriebswelle 41 auf, an der ein Keilrad 60 angeordnet ist und die über einen Keilriemen 61 mit dem Keilrad 60 einer Abtriebswelle 45 der jeweiligen elektrischen Antriebsmaschine 42 gekoppelt ist. Sowohl die Keilräder 60 als auch der Keilriemen 61 weisen hierbei ineinander passende Keilstrukturen auf. Für das in Parkroboterquerrichtung 23 hinten dargestellte Parkroboterrad 44 ist das Keilrad 60 ohne darauf laufenden Keilriemen 61 skizziert, sodass die Keilstruktur besonders deutlich wird. Eine jeweilige Antriebsmaschine 42 für dieses hintere Parkroboterrad 44 könnte beispielsweise parallel zur skizzierten Antriebsmaschine 42 auf der anderen Seite der Gewindestange 52 mit der darum herum angeordneten Gewindemutter 54 angeordnet sein. In Fig. 3 wird zudem verdeutlicht, wie eine Dämpfungseinheit für die Antriebseinrichtung 40 realisiert sein kann. Die jeweilige Lagerachse 58 der jeweiligen Antriebsräder 44 weist einen Lagerachsenrahmen 66 auf. Dieser Lagerachsenrahmen 66 ist mit einem Dämpfungsrahmen 68 gekoppelt, und zwar über jeweilige Tellerfedern 69. Der Dämpfungsrahmen 68 ist wiederum in einem oberen Teilbereich mit der hier nicht skizzierten Haltevorrichtung 32 gekoppelt, genauso wie die zentrale Gewindestange 52. Mit einer derartigen Dämpfungseinheit können beispielsweise vertikale Vibrationen, wie sie zum Beispiel bei Fahrten auf unebenen Fahrböden 17 auftreten können, reduziert und somit gedämpft werden. Voraussetzung hierfür ist jedoch, dass die jeweilige Lagerachse 58 jeweils elastisch mit der Gewindemutter 54 gekoppelt ist. Zudem weist die Antriebseinrichtung 40 eine Antriebsachse 67 auf, die die Antriebsmaschine 42 mit der Gewindemutter 54 verbindet. Auch im Bereich dieser Antriebsachse 67 kann mittels der Tellerfeder 69 eine Kopplung mit dem Dämpfungsrahmen 68 erfolgen, sodass auch horizontale Stöße gedämpft werden können.

Die Antriebsmaschine 42 ist dazu ausgelegt, während des Antreibens des Parkroboterrads 44 auf der kreisförmigen Bahn 62 um die zentrale Gewindestange 52 herum, ebenfalls eine Rotationsbewegung um die Rotationsachse 55 durchzuführen. Daher ist um die kreisförmige Bahn 62 herum ein Schleifring 70 angeordnet, über den mittels des Gleitkontakts 71 die Antriebsmaschine 42 mit elektrischer Energie versorgt werden kann, um das Antriebsrad 44 antreiben zu können.

Bei einer Drehbewegung der Parkroboterräder 44 um die Rotationsachse 55 ist letztendlich eine Bewegung in Parkroboterhochrichtung 22 möglich, da hierbei die Haltevorrichtung 32 zwischen der abgesenkten und der angehobenen Stellung verstellt werden kann. Hierbei werden die beiden Parkroboterräder 44 jeweils in entgegengesetzte Drehrichtung 64 um die Drehachse 39 angetrieben. Mit dem Parkroboter 20 sowie mit der Antriebseinrichtung 40 ist jedoch auch eine translatorische Fortbewegung des Parkroboters 20 möglich, wobei dann die zwei Parkroboterräder 44 derart angetrieben werden, dass sie sich in einer gleichen Drehrichtung 64 um die jeweiligen Drehachsen 39 der jeweiligen Parkroboterräder 44 drehen.

In Fig. 4 ist in einer geschnittenen Darstellung, in der die Haltevorrichtungsoberfläche nicht dargestellt ist, der Parkroboter 20 skizziert, der insgesamt vier Antriebseinrichtungen 40 umfasst. Hierbei wird deutlich, dass an den jeweiligen Radhaltearmen 34 jeweilige Abgleitrollen 38 angeordnet sind, deren jeweilige Drehachsen 39 parallel zu einer Längsrichtung der jeweiligen Radhaltearme 34 angeordnet sind. Die Abgleitrollen 38 sind jeweils als passive Rollen ausgebildet, sodass sich diese relativ zu dem Rad 14 des Kraftfahrzeugs 10 bewegen können.

Zudem weist der Parkroboter 20 an beiden Seiten jeweils eine Sensoreinrichtung 48 auf, bei der es sich beispielsweise um eine Kamera, ein Radargerät, ein Lidar-Gerät, einen Laserscanner oder ein Ultraschallgerät handelt. Die Sensoreinrichtung 48 ist jeweils dazu ausgelegt, eine Umgebung des Parkroboters 20 zu erfassen und gegebenenfalls Hindernisse in dieser erfassten Umgebung zu lokalisieren. Zudem weist der Parkroboter 20 eine Steuereinrichtung 49 auf, die dazu ausgelegt ist, beispielsweise basierend auf den Sensordaten der Sensoreinrichtungen 48 eine Fahrtrajektorie für den Parkroboter 20 zu bestimmen oder entsprechende Steuerbefehle für das Positionieren in der Aufnahmeposition am Rad 14 des Kraftfahrzeugs 10 bereitzustellen. Der Parkroboter 20 kann außerdem eine Kommunikationsschnittstelle umfassen, über die der Parkroboter 20 die Fahrtrajektorie, Sensordaten und/oder Ansteuerbefehle von anderen Einrichtungen, beispielsweise anderen Parkrobotern 20, von einem Leitroboter oder von einem Infrastrukturverwaltungsserver empfangen oder an diese übermittelt kann.

Der Parkroboter 20 ist insgesamt dazu ausgelegt, autonom beispielsweise innerhalb eines Parkhauses ein Rad 14 eines Kraftfahrzeugs 10 anzuheben, dann im Verbund mit mehreren Parkrobotern 20, die jeweils eines der Räder 14 des Kraftfahrzeugs 10 angehoben haben, zu einer Zielposition im Parkhaus zu fahren und dort das Rad 14 wieder abzusetzen. Das Anheben des Rades 14 erfolgt hierbei lediglich durch Drehen der Gewindemutter 54 um die Gewindestange 52 in den jeweiligen Antriebseinrichtungen 40 des Parkroboters 20, das heißt mithilfe der jeweiligen höhenverstellbaren Fahrwerke 50, sodass die Haltevorrichtung 32 mit dem festgehaltenen Rad 14 jeweils in die angehobene Stellung verfahren werden kann.

Das Beispiel zeigt ein Gesamtsystem, das aus vier identischen Transportplattformen, und zwar den Parkrobotern 20, besteht. Um beispielsweise ein Kraftfahrzeug 10 mit diesen Parkrobotern 20 transportieren zu können, fahren die jeweiligen Parkroboter 20 zu einem der Räder 14 des Kraftfahrzeugs 10, sodass eine Mitte der jeweiligen Radaufstandsflächen 15 mittig zwischen zwei Radhaltearmen 34 positioniert ist. Die Haltevorrichtung 32, das heißt die tragende Struktur des Parkroboters 20, umgibt somit das Rad 14 des Kraftfahrzeugs 10. Jede Transportplattform, das heißt jeder Parkroboter 20, besitzt nun vier Antriebseinrichtungen 40, die auch als Drehgestelle bezeichnet werden können. Jede einzelne dieser Antriebseinrichtungen 40 kann sich um die Rotationsachse 55 drehen, die fest mit der Haltevorrichtung 32 gekoppelt ist. Die Rotationsachse 55 verläuft hierbei mittig durch die jeweilige Gewindestange 52. An der Antriebseinrichtung 40 sind nun die Parkroboterräder 44 befestigt, die über einen Riementrieb mit der jeweiligen Antriebsmaschine 42, das heißt einem Motor, verbunden sind. Die Differenz der Drehzahl der jeweiligen Antriebsmaschine 42 lässt sich durch die Orientierung der Antriebseinrichtung 40 einstellen. Durch mehrmaliges Drehen der Antriebseinrichtung 40 um die Gewindestange 52, das heißt um die Rotationsachse 55 herum, wird nun ein Hub erzeugt, der die Haltevorrichtung 32 aufwärts bewegt und so letztendlich das Kraftfahrzeug 10 anhebt. Die Parkroboterräder 44 sind hierbei auf jeweiligen Lagerachsen 58 gelagert und mit jeweiligen Keilrädern 60, die man auch als Riementeller bezeichnen kann, verbunden. Liegt eine Relativbewegung der jeweiligen Parkroboterräder 44 und einer Antriebseinrichtung 40 zueinander vor, drehen sich diese relativ zum Boden. Auf diese Weise lassen sich Fahrmanöver in der Ebene, die von der Parkroboterlängsrichtung 24 und der Parkroboterquerrichtung 23 aufgespannt wird, frei wählen. Kommt es zu einer Drehung um die Gewindestange 52, führt die Gewindemutter 54 eine Aufwärts- oder Abwärtsbewegung durch. Das Gewinde besitzt sogar eine geringe Steigung, sodass kleine Lenkwinkel des Parkroboters 20 nur eine geringe Hubwirkung haben und eine hohe Übersetzung beim Anheben der Haltevorrichtung 32 vorliegt.

Die Gewindestange 52 besitzt einen unteren Anschlag, das Anschlagelement 56, das am oberen Ende statisch mit der tragenden Struktur der Transportplattform, das heißt der Haltevorrichtung 32 des Parkroboters 20, verbunden ist. Zur Verbesserung der Fahreigenschaften kann die Lagerachse 58 elastisch mit der Gewindemutter 54 verbunden sein. Eine Höhendifferenz des Untergrunds zwischen den Abstandsflächen der jeweiligen Parkroboterräder 44 auf dem Fahrboden 17 kann somit ausgeglichen werden.

Insgesamt zeigt das Beispiel ein Multirobotertransportfahrzeug mit Unterfahrfunktion und omnidirektionalem Hubfahrwerk zum Transportieren von Kraftfahrzeugen 10.

### Bezugszeichenliste

| | | | |
|---|---|---|---|
| 10 | Kraftfahrzeug | 70 | Schleifring |
| 14 | Rad | 71 | Gleitkontakt |
| 15 | Radaufstandsfläche | | |
| 17 | Fahrboden | | |
| 20 | Parkroboter | | |
| 22 | Parkroboterhochrichtung | | |
| 23 | Parkroboterquerrichtung | | |
| 24 | Parkroboterlängsrichtung | | |
| 32 | Haltevorrichtung | | |
| 33 | Halteelement | | |
| 34 | Radhaltearm | | |
| 36 | Verbindungselement | | |
| 38 | Abgleitrolle | | |
| 39 | Drehachse | | |
| 40 | Antriebseinrichtung | | |
| 41 | Antriebswelle | | |
| 42 | Antriebsmaschine | | |
| 44 | Parkroboterrad | | |
| 45 | Abtriebswelle | | |
| 48 | Sensoreinrichtung | | |
| 49 | Steuereinrichtung | | |
| 50 | Fahrwerk | | |
| 52 | Gewindestange | | |
| 54 | Gewindemutter | | |
| 55 | Rotationsachse | | |
| 56 | Anschlagselement | | |
| 58 | Lagerachse | | |
| 60 | Keilrad | | |
| 61 | Keilriemen | | |
| 62 | kreisförmige Bahn | | |
| 64 | Drehrichtung | | |
| 66 | Lagerachsenrahmen | | |
| 67 | Antriebsachse | | |
| 68 | Dämpfungsrahmen | | |
| 69 | Tellerfeder | | |
| 70 | Schleifring | | |
| 71 | Gleitkontakt | | |

## Patentansprüche

1. Parkroboter (20) für ein Kraftfahrzeug (10), wobei der Parkroboter (20) eine Haltevorrichtung (32) zum Festhalten eines Rades (14) des Kraftfahrzeug (10) aufweist, wobei an zwei gegenüberliegenden Seiten der Haltevorrichtung (32) zumindest mittelbar jeweils mindestens eine Antriebseinrichtung (40) angeordnet ist, die jeweils ein höhenverstellbares Fahrwerk (50) mit mindestens einem Parkroboterrad (44) und mindestens eine Antriebsmaschine (42) zum Antreiben des mindestens einen Parkroboterrads (44) aufweist, wobei das Fahrwerk (50) dazu ausgelegt ist, die Haltevorrichtung (32) relativ zu dem mindestens einen Parkroboterrad (44) zwischen einer abgesenkten Stellung und einer angehobenen Stellung zu verstellen, und der Parkroboter (20) dazu ausgelegt ist, an das Rad (14) des Kraftfahrzeugs (10) autonom in eine Aufnahmeposition heranzufahren, bei der die Haltevorrichtung (32) das Rad (14) festhält, und durch Verstellen der Haltevorrichtung (32) in die angehobene Stellung mittels der höhenverstellbaren Fahrwerke (50) das festgehaltene Rad (14) des Kraftfahrzeugs (10) relativ zu den jeweiligen Parkroboterrädern (44) anzuheben, **dadurch gekennzeichnet, dass**
die jeweilige Antriebseinrichtung (40) jeweils eine zentrale Gewindestange (52), die an einem Ende zumindest mittelbar mit der Haltevorrichtung (32) starr gekoppelt ist, und das Fahrwerk (50) der jeweiligen Antriebseinrichtung (40) jeweils eine um die jeweilige zentrale Gewindestange (52) drehbar gelagerte Gewindemutter (54), die zumindest mittelbar mit dem wenigstens einen Parkroboterrad (44) gekoppelt ist, aufweist und die jeweilige Antriebseinrichtung (40) dazu ausgelegt ist, durch jeweiliges Drehen der Gewindemutter (54) um die jeweilige zentrale Gewindestange (52) die Haltevorrichtung (32) mit den jeweiligen zentralen Gewindestangen (52) relativ zu der jeweiligen Gewindemutter (54) zwischen der abgesenkten und der angehobenen Stellung zu verstellen.

2. Parkroboter (20) nach dem vorhergehenden Anspruch, wobei die jeweilige Antriebseinrichtung (40) dazu ausgelegt ist, mittels Antreiben des mindestens einen Parkroboterrads (44) auf einer kreisförmigen Bahn (62) um die zentrale Gewindestange (52) herum die Gewindemutter (54) um die zentrale Gewindestange (52) zu drehen.

3. Parkroboter (20) nach Anspruch 2, wobei die jeweilige Antriebseinrichtung (40) einen Schleifring (70) aufweist und die mindestens eine Antriebsmaschine (42) dazu ausgelegt ist, während des Antreibens des mindestens einen Parkroboterrads (44) auf der kreisförmigen Bahn (62) ebenfalls um die zentrale Gewindestange (52) herumbewegt und mittels des Schleifrings (70) mit elektrischer Energie versorgt zu werden.

4. Parkroboter (20) nach einem der vorhergehenden Ansprüche, wobei die jeweilige Antriebseinrichtung (40) zwei Parkroboterräder (44) aufweist und dazu ausgelegt ist, die beiden Parkroboterräder (44) für das Verstellen der Haltevorrichtung (32) zwischen der abgesenkten und der angehobenen Stellung jeweils in entgegengesetzter Drehrichtung (64) der Parkroboterräder (44) anzutreiben und für eine translatorische Fortbewegung des Parkroboters (20) die zwei Parkroboterräder (44) in der gleichen Drehrichtung (64) anzutreiben.

5. Parkroboter (20) nach einem der vorhergehenden Ansprüche, wobei das jeweilige mindestens eine Parkroboterrad (44) zumindest mittelbar über einen jeweilige Lagerachse (58) mit der jeweiligen Gewindemutter (54) elastisch gekoppelt ist, wobei die jeweilige Lagerachse (58) insbesondere mit einer jeweiligen Dämpfungseinheit der Antriebseinrichtung (40) gekoppelt ist.

6. Parkroboter (20) nach einem der vorhergehenden Ansprüche, wobei die jeweilige Gewindestange (52) an ihrem jeweiligen anderen Ende mit einem jeweiligen Anschlagelement (56) gekoppelt ist, das jeweils dazu ausgelegt ist, das Drehen der jeweiligen Gewindemutter (54) um die jeweilige zentrale Gewindestange (52) am jeweiligen anderen Ende der jeweiligen Gewindestange (52) bei Erreichen desselben zu blockieren.

7. Parkroboter (20) nach einem der vorhergehenden Ansprüche, wobei das jeweilige mindestens eine Parkroboterrad (44) eine jeweilige Antriebswelle (41) aufweist, die über einen jeweiligen Riementrieb mit einer jeweiligen Abtriebswelle (45) der jeweiligen Antriebsmaschine (42) gekoppelt ist.

8. Parkroboter (20) nach einem der vorhergehenden Ansprüche, wobei der Parkroboter (20) dazu ausgelegt ist, unter das Kraftfahrzeug (10) zu fahren und sich dort autonom an dem Rad (14) des Kraftfahrzeugs (10) in der Aufnahmeposition zu positionieren.

9. Parkroboter (20) nach einem der vorhergehenden Ansprüche, wobei die Haltevorrichtung (32) an den zwei gegenüberliegenden Seiten jeweils einen Radhaltearm (34) zum Festhalten des Rades (14) des Kraftfahrzeugs (10) sowie ein Verbindungselement (36) aufweist, das die zwei Radhaltearme (34) in einer Parallelstellung hält, wobei der jeweilige Radhaltearm (34) eine jeweilige Abgleitrolle (38) aufweist, deren jeweilige Drehachse (39) parallel zu einer Längsrichtung des jeweiligen Radhaltearms (34) angeordnet ist.

## Claims

1. Parking robot (20) for a motor vehicle (10), wherein the parking robot (20) has a holding device (32) for firmly holding a wheel (14) of the motor vehicle (10), wherein at least one drive installation (40) is in each case disposed at least indirectly on two opposite sides of the holding device (32), said drive installation (40) having in each case one height-adjustable running gear (50) having at least one parking robot wheel (44) and at least one drive machine (42) for driving the at least one parking robot wheel (44), wherein the running gear (50) is conceived for adjusting the holding device (32) relative to the at least one parking robot wheel (44) between a lowered position and a raised position, and the parking robot (20) is conceived for autonomously moving the wheel (14) of the motor vehicle (10) to a receiving position in which the holding device (32) firmly holds the wheel (14) and by adjusting the holding device (32) to the raised position by means of the height-adjustable running gear (50) is conceived for raising the firmly held wheel (14) of the motor vehicle (10) relative to the respective parking robot wheels (44),
**characterized in that**
the respective drive installation (40) has in each case one central threaded bar (52) which at one end is at least indirectly coupled rigidly to the holding device (32), and the running gear (50) of the respective drive installation (40) has in each case one threaded nut (54) which is mounted so as to be rotatable about the respective central threaded bar (52) and is at least indirectly coupled to the at least one parking robot wheel (44), and the respective drive installation (40), by correspondingly rotating the threaded nut (54) about the respective central threaded bar (52), by way of the respective central threaded bars (52), is conceived for adjusting the holding device (32) relative to the respective threaded nut (54) between the lowered and the raised position.

2. Parking robot (20) according to the preceding claim, wherein the respective drive installation (40), by means of driving the at least one parking robot wheel (44) on a circular path (62) about the central threaded bar (52), is conceived for rotating the threaded nut (54) about the central threaded bar (52).

3. Parking robot (20) according to Claim 2, wherein the respective drive installation (40) has a collector ring (70), and the at least one drive machine (42) while driving the at least one parking robot wheel (44) on the circular path (62) is conceived for being likewise moved about the central threaded bar (52) and by means of the collector ring (70) to be provided with electric power.

4. Parking robot (20) according to one of the preceding claims, wherein the respective drive installation (40) has two parking robot wheels (44) and, for adjusting the holding device (32) between the lowered and the raised position, is conceived for driving both of the parking robot wheels (44) in a respective opposite rotation direction (64) of the parking robot wheels (44) and, for a translatory movement of the parking robot (20), is conceived for driving the two parking robot wheels (44) in the same rotation direction (64).

5. Parking robot (20) according to one of the preceding claims, wherein the respective at least one parking robot wheel (44) by way of a respective bearing axle (58) is at least indirectly coupled elastically to the respective threaded nut (54), wherein the respective bearing axle (58) is in particular coupled to a respective absorption unit of the drive installation (40).

6. Parking robot (20) according to one of the preceding claims, wherein the respective threaded bar (52) at the respective other end thereof is coupled to a respective detent element (56) which is in each case conceived for blocking the rotation of the respective threaded nut (54) about the respective central threaded bar (52) at the respective other end of the respective threaded bar (52) when said respective other end is reached.

7. Parking robot (20) according to one of the preceding claims, wherein the respective at least one parking robot wheel (44) has a respective drive shaft (41) which by way of a respective belt drive is coupled to a respective output shaft (45) of the respective drive machine (42).

8. Parking robot (20) according to one of the preceding claims, wherein the parking robot (20) is conceived for moving below the motor vehicle (10) and therebelow to autonomously position itself in the receiving position on the wheel (14) of the motor vehicle (10).

9. Parking robot (20) according to one of the preceding claims, wherein the holding device (32) on the two opposite sides has in each case one wheel holding arm (34) for firmly holding the wheel (14) of the motor vehicle (10), as well as a connection element (36) which holds the two wheel holding arms (34) in a parallel position, wherein the respective wheel holding arm (34) has a respective slip roller (38), the respective rotation axis (39) of said slip roller (38) being disposed so as to be parallel with a longitudinal direction of the respective wheel holding arm (34).

## Revendications

1. Robot de stationnement (20) pour un véhicule automobile (10), le robot de stationnement (20) comprenant un dispositif de retenue (32) servant à l'immobilisation d'une roue (14) du véhicule automobile (10), au moins un dispositif d'entraînement (40) étant disposé respectivement au moins indirectement sur deux côtés opposés du dispositif de retenue (32), lequel dispositif d'entraînement comprend respectivement un mécanisme de roulement (50) réglable en hauteur et doté d'au moins une roue de robot de stationnement (44) et au moins une machine d'entraînement (42) servant à l'entraînement de l'au moins une roue de robot de stationnement (44), le mécanisme de roulement (50) étant conçu pour régler le dispositif de retenue (32) relativement à l'au moins une roue de robot de stationnement (44) entre une position abaissée et une position élevée, et le robot de stationnement (20) étant conçu pour se rapprocher de la roue (14) du véhicule automobile (10) de manière autonome dans une position de réception dans laquelle le dispositif de retenue (32) immobilise la roue (14), et pour soulever la roue immobilisée (14) du véhicule automobile (10) relativement aux roues de robot de stationnement (44) respectives par réglage du dispositif de retenue (32) dans la position élevée au moyen des mécanismes de roulement (50) réglables en hauteur,
**caractérisé en ce que**
le dispositif d'entraînement (40) respectif comprend respectivement une tige filetée centrale (52) qui est accouplée rigidement au moins indirectement au dispositif de retenue (32) à une extrémité, et le mécanisme de roulement (50) du dispositif d'entraînement (40) respectif comprend respectivement un écrou fileté (54) monté de manière à pouvoir tourner autour de la tige filetée centrale (52) respective, lequel écrou fileté est accouplé au moins indirectement à l'au moins une roue de robot de stationnement (44), et le dispositif d'entraînement (40) respectif est conçu pour régler le dispositif de retenue (32) avec les tiges filetées centrales (52) respectives relativement à l'écrou fileté (54) respectif entre la position abaissée et la position élevée par rotation respective de l'écrou fileté (54) autour de la tige filetée centrale (52) respective.

2. Robot de stationnement (20) selon la revendication précédente, le dispositif d'entraînement (40) respectif étant conçu pour faire tourner l'écrou fileté (54) autour de la tige filetée centrale (52) par entraînement de l'au moins une roue de robot de stationnement (44) sur une trajectoire circulaire (62) autour de la tige filetée centrale (52).

3. Robot de stationnement (20) selon la revendication 2, le dispositif d'entraînement (40) respectif comprenant une bague collectrice (70) et l'au moins une machine d'entraînement (42) étant conçue pour, pendant l'entraînement de l'au moins une roue de robot de stationnement (44) sur la trajectoire circulaire (62), être déplacée également autour de la tige filetée centrale (52) et pour être alimentée en énergie électrique au moyen de la bague collectrice (70).

4. Robot de stationnement (20) selon l'une des revendications précédentes, le dispositif d'entraînement (40) respectif comprenant deux roues de robot de stationnement (44) et étant conçu pour entraîner les deux roues de robot de stationnement (44) respectivement dans le sens de rotation inverse (64) des roues de robot de stationnement (44) pour le réglage du dispositif de retenue (32) entre la position abaissée et la position élevée et pour entraîner les deux roues de robot de stationnement (44) dans le même sens de rotation (64) pour un mouvement de translation du robot de stationnement (20).

5. Robot de stationnement (20) selon l'une des revendications précédentes, l'au moins une roue de robot de stationnement (44) respective étant accouplée de manière élastique à l'écrou fileté (54) respectif au moins indirectement par le biais d'un axe de palier (58) respectif, l'axe de palier (58) respectif étant accouplé en particulier à une unité d'amortissement respective du dispositif d'entraînement (40).

6. Robot de stationnement (20) selon l'une des revendications précédentes, la tige filetée (52) respective étant, à son autre extrémité respective, accouplée à un élément de butée (56) respectif, lequel est respectivement conçu pour bloquer la rotation de l'écrou fileté (54) respectif autour de la tige filetée centrale (52) respective à l'autre extrémité respective de la tige filetée (52) respective lorsque celle-ci est atteinte.

7. Robot de stationnement (20) selon l'une des revendications précédentes, l'au moins une roue de robot de stationnement (44) respective comprenant un arbre d'entraînement (41) respectif qui est accouplé à un arbre de sortie (45) respectif de la machine d'entraînement (42) respective par le biais d'un entraînement à courroie respectif.

8. Robot de stationnement (20) selon l'une des revendications précédentes, le robot de stationnement (20) étant conçu pour se déplacer en dessous du véhicule automobile (10) et pour s'y positionner de manière autonome dans la position de réception au niveau de la roue (14) du véhicule automobile (10).

9. Robot de stationnement (20) selon l'une des revendications précédentes, le dispositif de retenue (32) comprenant sur les deux côtés opposés respectivement un bras de retenue de roue (34) servant à l'immobilisation de la roue (14) du véhicule automobile (10) ainsi qu'un élément de liaison (36) qui maintient les deux bras de retenue de roue (34) dans une position parallèle, le bras de retenue de roue (34) respectif comprenant un galet de glissement (38) respectif, dont l'axe de rotation (39) respectif est disposé parallèlement à une direction longitudinale du bras de retenue de roue (34) respectif.
